(19) Europäisches Patentamt
European Patent Office
Office européen des brevets

(11) EP 3 050 907 A1

(12) EUROPÄISCHE PATENTANMELDUNG

(43) Veröffentlichungstag:
**03.08.2016 Patentblatt 2016/31**

(51) Int Cl.:
***C08G 64/34*** *(2006.01)* ***C08G 64/42*** *(2006.01)*

(21) Anmeldenummer: **15152830.4**

(22) Anmeldetag: **28.01.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Covestro Deutschland AG**
**51373 Leverkusen (DE)**

(72) Erfinder:
- **HOFFMANN, Jörg**
  **47800 Krefeld (DE)**
- **MÜLLER, Thomas Ernst**
  **52074 Aachen (DE)**
- **POHL, Michael**
  **52074 Aachen (DE)**
- **LEITNER, Walter**
  **52074 Aachen (DE)**

(74) Vertreter: **Levpat**
**c/o Covestro AG**
**Alfred-Nobel-Straße 10**
**40789 Monheim am Rhein (DE)**

# (54) Verfahren zur Herstellung von Polyethercarbonatpolyolen

(57) Gegenstand der Erfindung ist ein Verfahren zur Herstellung von Polyethercarbonatpolyolen durch Anlagerung von Alkylenoxiden und Kohlendioxid an H-funktionelle Startersubstanz in Gegenwart eines Doppelmetallcyanid (DMC)-Katalysators oder in Gegenwart eines Metallkomplexkatalysators auf Basis der Metalle Zink und/oder Cobalt, wobei
(γ) Alkylenoxid und Kohlendioxid an H-funktionelle Startersubstanz in einem Reaktor in Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird, und wobei
(δ) das in Schritt (γ) erhaltene Reaktionsgemisch im Reaktor verbleibt oder kontinuierlich in einen Nachreaktor überführt wird, wobei jeweils im Wege einer Nachreaktion der Gehalt an freiem Alkylenoxid im Reaktionsgemisch reduziert wird,

dadurch gekennzeichnet, dass während der Nachreaktion eine Komponente K zugegeben wird, wobei Komponente K ausgewählt ist aus mindestens einer Verbindung, die eine Phosphor-Sauerstoff-Wasserstoff-Gruppe enthält.

EP 3 050 907 A1

**Beschreibung**

Die vorliegende Erfindung betrifft ein Verfahren zur Herstellung von Polyethercarbonatpolyolen durch katalytische Copolymerisation von Kohlendioxid ($CO_2$) mit Alkylenoxiden in Gegenwart von H-funktioneller Startersubstanz.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

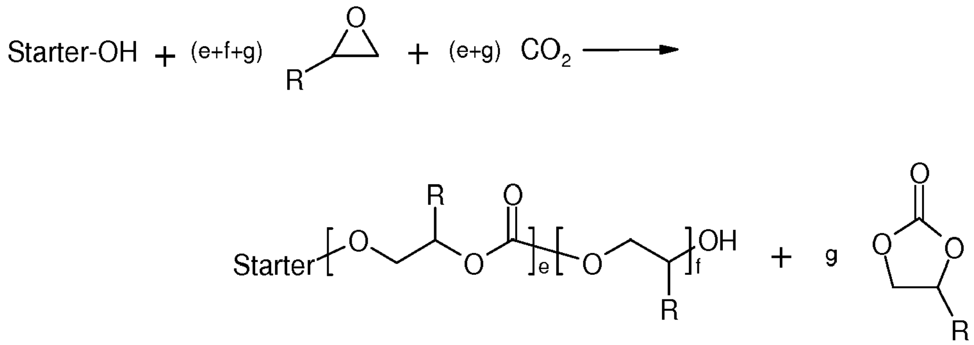

(I)

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 für den Aktivierungsschritt in den Beispielen 1 bis 7 angegebene Menge von 60 Gew.-% Alkylenoxidverbindung relativ zur H-funktionellen Startersubstanz ist hoch und hat den Nachteil, dass dies für großtechnische Anwendungen aufgrund der hohen Exothermie der Homo-Polymerisation von Alkylenoxidverbindungen ein gewisses Sicherheitsrisiko darstellt.

WO-A 2003/029325 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. $CO_2$-Enddrücke von bis zu 150 bar stellen sehr hohe Anforderungen an den Reaktor sowie an die Sicherheit. Selbst durch den überaus hohen Druck von 150 bar wurden nur ca. 33 Gew.-% $CO_2$ bis maximal 42 Gew.-% $CO_2$ eingebaut. Die dargelegten Beispiele beschreiben die Verwendung eines Lösemittels (Toluol), das nach der Reaktion wieder thermisch abgetrennt werden muss, was zu erhöhtem Zeit- und Kostenaufwand führt. Des Weiteren weisen die Polymere mit einer Uneinheitlichkeit bzw. Polydispersität von 2,7 oder mehr eine sehr breite Molmassenverteilung auf.

WO-A 2008/092767 offenbart ein Verfahren zur Herstellung von Polyethercarbonatpolyolen, dadurch gekennzeichnet, dass eine oder mehrere H-funktionelle Startersubstanzen im Reaktor vorgelegt werden und dass eine oder mehrere H-funktionelle Startersubstanzen während der Reaktion kontinuierlich in den Reaktor zudosiert werden. Dieses Verfahren hat also den Nachteil, dass eine oder mehrere H-funktionelle Startersubstanzen im Reaktor vorgelegt werden müssen.

Die europäischen Patentanmeldungen mit den Anmeldenummern EP12181907.2 und EP12181905.6 offenbaren Verfahren zur Herstellung von Polyethercarbonatpolyolen durch Anlagerung von Alkylenoxiden und Kohlendioxid an eine oder mehrere H-funktionelle Startersubstanz(en) in Gegenwart eines Doppelmetallcyanid-Katalysators, dadurch gekennzeichnet, dass Suspensionsmittel, die keine H-funktionellen Gruppen enthalten, in einem Reaktor vorgelegt werden und eine oder mehrere H-funktionelle Startersubstanz(en) während der Reaktion kontinuierlich in den Reaktor zudosiert werden. EP12181907.2 offenbart zudem, dass dabei die kontinuierlich zudosierte Startersubstanz (z.B. Glycerin) mit geringen Mengen Phosphorsäure (z.B. 90 ppm 85%ige $H_3PO_4$) versetzt werden kann.

Es war daher Aufgabe der vorliegenden Erfindung, ein Verfahren zur Herstellung von Polyethercarbonatpolyolen bereitzustellen, wobei eine günstige Selektivität (d.h. niedriges Verhältnis von cyclischem Carbonat zu linearem polymer gebundenen Carbonat) erreicht wird.

Überraschend wurde gefunden, dass die erfindungsgemäße Aufgabe gelöst wird durch ein Verfahren zur Herstellung von Polyethercarbonatpolyolen durch Anlagerung von Alkylenoxiden und Kohlendioxid an H-funktionelle Startersubstanz in Gegenwart eines Doppelmetallcyanid (DMC)-Katalysators oder in Gegenwart eines Metallkomplexkatalysators auf Basis der Metalle Zink und/oder Cobalt, wobei

(α) gegebenenfalls eine Teilmenge der H-funktionellen Startersubstanz und/oder Suspensionsmittel, das keine H-funktionellen Gruppen enthält, in einem Reaktor jeweils gegebenenfalls gemeinsam mit DMC-Katalysator vorgelegt wird,

(β) gegebenenfalls zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird,

(γ) Alkylenoxid und Kohlendioxid an H-funktionelle Startersubstanz in einem Reaktor in Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird, und wobei

(δ) das in Schritt (γ) erhaltene Reaktionsgemisch im Reaktor verbleibt oder kontinuierlich in einen Nachreaktor überführt wird, wobei jeweils im Wege einer Nachreaktion der Gehalt an freiem Alkylenoxid im Reaktionsgemisch reduziert wird,

dadurch gekennzeichnet, dass während der Nachreaktion eine Komponente K zugegeben wird, wobei Komponente K ausgewählt ist aus mindestens einer Verbindung, die eine Phosphor-Sauerstoff-Wasserstoff-Gruppe enthält.

<u>Zu Schritt (α):</u>

Das erfindungsgemäße Verfahren zur Herstellung von Polyethercarbonatpolyolen durch Anlagerung von Alkylenoxiden und Kohlendioxid an H-funktionelle Startersubstanz kann insbesondere dann den Schritt (α) umfassen, wenn das Verfahren in Gegenwart eines Doppelmetallcyanid (DMC)-Katalysators durchgeführt wird.

Die gegebenenfalls in Schritt (α) eingesetzte Teilmenge der H-funktionellen Startersubstanz kann Komponente K enthalten, beispielsweise in einer Menge von mindestens 100 ppm, bevorzugt von 100 bis 10000 ppm.

Bei dem erfindungsgemäßen Verfahren kann zunächst eine Teilmenge der H-funktionellen Startersubstanz und/oder ein Suspensionsmittel, das keine H-funktionellen Gruppen enthält, im Reaktor vorgelegt werden. Anschließend wird die für die Polyaddition benötigte Menge an DMC-Katalysator, der bevorzugt nicht aktiviert ist, in den Reaktor gegeben. Die Reihenfolge der Zugabe ist dabei nicht entscheidend. Es kann auch erst der DMC-Katalysator und anschließend das Suspensionsmittel in den Reaktor gefüllt werden. Alternativ kann auch erst der DMC-Katalysator in dem inerten Suspensionsmittel suspendiert und anschließend die Suspension in den Reaktor gefüllt werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Die erfindungsgemäß eingesetzten Suspensionsmittel enthalten keine H-funktionellen Gruppen. Als Suspensionsmittel sind alle polar-aprotischen, schwach polar-aprotischen und unpolaraprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B. Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Als erfindungsgemäß eingesetzte Suspensionsmittel sind ebenfalls geeignet aliphatische Lactone, aromatische Lactone, Lactide, cyclische Carbonate mit mindestens drei gegebenenfalls substituierten Methylengruppen zwischen den Sauerstoffatomen der Carbonatgruppe, aliphatische cyclische Anhydride und aromatischen cyclische Anhydride.

Aliphatische oder aromatische Lactone in Sinne der Erfindung sind cyclische Verbindungen enthaltend eine Esterbindung im Ring, vorzugsweise

4-gliedrige Ringlactone wie ß-Propiolacton, ß-Butyrolacton, ß-Isovalerolacton, ß-Caprolacton, β-Isocaprolacton, ß-Methyl-ß-valerolacton,

5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on,

6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on,

7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4S)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on,

höhergliedrige Ringlactone, wie (7*E*)-Oxacycloheptadec-7-en-2-on.

Besonders bevorzugt ist ε-Caprolacton und Dihydrocumarin.

Lactide in Sinne der Erfindung sind cyclische Verbindungen enthaltend zwei oder mehr Esterbindungen im Ring, vorzugsweise Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Cyclische Carbonate mit mindestens drei gegebenenfalls substituierten Methylengruppen zwischen den Sauerstoffatomen der Carbonatgruppe sind vorzugsweise Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan- 1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Anhydride sind vorzugsweise Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Als Suspensionsmittel kann auch eine Mischung aus zwei oder mehreren der genannten Suspensionsmittel eingesetzt werden. Höchst bevorzugt wird in Schritt (α) als Suspensionsmittel mindestens eine Verbindung ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Tetrachlorkohlenstoff, ε-Caprolacton, Dihydrocumarin, Trimethylencarbonat, Neopentylglykolcarbonat, 3,6-Dimethyl-1,4-dioxane-2,5-dion, Succinsäure¬anhydrid, Maleinsäureanhydrid und Phthalsäureanhydrid eingesetzt.

In einer Ausführungsform der Erfindung wird in Schritt (α) ein Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im Reaktor vorgelegt. Alternativ können auch in Schritt (α) ein Suspensionsmittel, das keine H-funktionellen Gruppen enthält, und zusätzlich eine Teilmenge der H-funktionellen Startersubstanz(en) sowie gegebenenfalls DMC-Katalysator im Reaktor vorgelegt werden.

Der DMC-Katalysator wird vorzugsweise in einer Menge eingesetzt, so dass der Gehalt an DMC-Katalysator im nach Schritt (γ) resultierenden Reaktionsprodukt 10 bis 10000 ppm, besonders bevorzugt 20 bis 5000 ppm und höchst bevorzugt 50 bis 500 ppm beträgt.

In einer bevorzugten Ausführungsform wird in Schritt (α) in das resultierende Gemisch (i) aus einer Teilmenge der H-funktionellen Startersubstanz und/oder Suspensionsmittel und (ii) DMC-Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird in Schritt (α) das resultierende Gemisch (i) aus einer Teilmenge der H-funktionellen Startersubstanz(en) und/oder Suspensionsmittel und (ii) DMC-Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt (α)

(α-I) eine Teilmenge der H-funktionellen Startersubstanz und/oder Suspensionsmittel vorgelegt und

(α-II) die Temperatur der Teilmenge der H-funktionellen Startersubstanz und/oder des Suspensionsmittels auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zur Teilmenge der H-funktionellen Startersubstanz und/oder Suspensionsmittel in Schritt (α-I) oder unmittelbar anschließend in Schritt (α-II) zugesetzt wird, und
wobei das Suspensionsmittel keine H-funktionellen Gruppen enthält.

<u>Zu Schritt (β)</u>

Schritt (β) dient der Aktivierung des DMC-Katalysators und bezieht sich somit auf die Ausführungsform des erfindungsgemäßen Verfahrens in Gegenwart eines DMC-Katalysators. Dieser Schritt (β) kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von $CO_2$, zum DMC-Katalysator bis zum Auftreten der Wärmeentwicklung. Gegebenenfalls kann die Teilmenge des Alkylenoxids in mehreren Einzelschritten, gegebenenfalls in Gegenwart von $CO_2$, zum DMC-Katalysator gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von $CO_2$, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten

Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Das Alkylenoxid kann in einem Schritt oder portionsweise in mehreren Teilmengen zugegeben werden. Bevorzugt wird nach Zugabe einer Teilmenge des Alkylenoxids die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre erfolgt und

(β2) in einer zweiten Aktivierungsstufe die Zugabe einer zweiten Teilmenge von Alkylenoxid unter Kohlendioxid-Atmosphäre erfolgt.

<u>Zu Schritt (γ):</u>

Die Dosierung der H-funktionellen Startersubstanz, Alkylenoxid und gegebenenfalls auch des Kohlendioxids kann simultan oder sequentiell (portionsweise) erfolgen, beispielsweise kann die gesamte Kohlendioxidmenge, die Menge an H-funktionellen Startersubstanzen und/oder die in Schritt (γ) dosierte Menge an Alkylenoxiden auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der H-funktionellen Startersubstanzen den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung von Alkylenoxid und/oder von H-funktioneller Startersubstanz erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide bzw. der H-funktionellen Startersubstanzen kann simultan oder sequentiell (portionsweise) über jeweils separate Dosierungen (Zugaben) erfolgen oder über eine oder mehrere Dosierungen, wobei das Alkylenoxid bzw. die H-funktionelle Startersubstanzen einzeln oder als Gemisch dosiert werden können. Über die Art und/oder Reihenfolge der Dosierung der H-funktionellen Startersubstanzen, der Alkylenoxide und/oder des Kohlendioxids ist es möglich, statistische, alternierende, blockartige oder gradientenartige Polyethercarbonatpolyole zu synthetisieren.

In einer bevorzugten Ausführungsform wird in Schritt (γ) die Dosierung der H-funktionellen Startersubstanz zeitlich vor der Zugabe des Alkylenoxids beendet.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide verbraucht werden und ob das Produkt gegebenenfalls $CO_2$-freie Polyether-Blöcke enthalten soll. Die Menge des Kohlendioxids (angegeben als Druck) kann bei der Zugabe der Alkylenoxide ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Eine bevorzugte Ausführungsform des erfindungsgemäßen Verfahrens ist unter anderem dadurch gekennzeichnet, dass in Schritt (γ) die Gesamtmenge der H-funktionellen Startersubstanz zugegeben wird. Diese Zugabe kann mit einer konstanten Dosierrate, mit einer variierenden Dosierrate oder portionsweise erfolgen.

Für das erfindungsgemäße Verfahren hat sich weiterhin gezeigt, dass die Copolymerisation (Schritt (γ)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im allgemeinen sehr langsam. Bei Temperaturen oberhalb von 150°C steigt die Menge an unerwünschten Nebenprodukten stark an.

Die Dosierung des Alkylenoxids, der H-funktionellen Startersubstanz und des DMC-Katalysators kann über

separate oder gemeinsame Dosierstellen erfolgen. In einer bevorzugten Ausführungsform werden das Alkylenoxid und die H-funktionelle Startersubstanz über separate Dosierstellen kontinuierlich dem Reaktionsgemisch zugeführt. Diese Zugabe der H-funktionellen Startersubstanz kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten (α) und (β) resultierende aktivierten DMC-Katalysator enthaltende Mischung in demselben Reaktor weiter mit einem oder mehreren Alkylenoxid(en), einer oder mehreren Startersubstanz(en) und Kohlendioxid umgesetzt. In einer weiteren bevorzugten Ausführungsform wird die gemäß den Schritten (α) und (β) resultierende aktivierten DMC-Katalysator enthaltende Mischung in einem anderen Reaktionsbehältnis (beispielsweise einem Rührkessel, Rohrreaktor oder Schlaufenreaktor) weiter mit Alkylenoxiden, einer oder mehreren Startersubstanz(en) und Kohlendioxid umgesetzt.

Bei Reaktionsführung in einem Rohrreaktor werden die gemäß den Schritten (α) und (β) resultierende aktivierten DMC-Katalysator enthaltende Mischung, eine oder mehrere H-funktionelle Startersubstanz(en), ein oder mehrere Alkylenoxid(e) und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyethercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Bevorzugt werden die Polyethercarbonatpolyole in einem kontinuierlichen Verfahren hergestellt, das sowohl eine kontinuierliche Copolymerisation als auch eine kontinuierliche Zugabe der einen oder mehreren H-funktionellen Startersubstanz(en) umfasst.

Gegenstand der Erfindung ist daher auch ein Verfahren, wobei in Schritt (γ) H-funktionelle Startersubstanz, Alkylenoxid sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator in H-funktioneller Startersubstanz suspendiert kontinuierlich zugegeben.

Beispielsweise wird für das kontinuierliche Verfahren zur Herstellung der Polyethercarbonatpolyole gemäß den Schritten (α) und (β) eine aktivierte DMC-Katalysatorenthaltende Mischung hergestellt, dann werden gemäß Schritt (γ)

(γ1) jeweils eine Teilmenge an H-funktioneller Startersubstanz, Alkylenoxid und Kohlendioxid zudosiert zum Initiieren der Copolymerisation, und

(γ2) während des Fortschreitens der Copolymerisation jeweils die verbleibende Menge an DMC-Katalysator, H-funktionelle Startersubstanz und Alkylenoxid in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Startersubstanz zugegeben,

wobei die Menge vorzugsweise so gewählt ist, dass der Gehalt an DMC-Katalysator in dem bei Schritt (γ) resultierenden Reaktionsprodukt 10 bis 10000 ppm, besonders bevorzugt 20 bis 5000 ppm und höchst bevorzugt 50 bis 500 ppm beträgt.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Es ist auch überraschend gefunden worden, dass das Verfahren der vorliegenden Erfindung zur Herstellung großer Mengen des Polyethercarbonatpolyols verwendet werden kann, wobei anfänglich ein gemäß den Schritten (α) und (β) in einer Teilmenge der H-funktionellen Startersubstanz und/oder in Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" DMC-Katalysator als nicht-aktivierter DMC-Katalysator in fester Form oder in Form einer Aufschlämmung in H-funktioneller Startersubstanz oder in Suspensionsmittel definiert. Die Fähigkeit des vorliegenden Verfahrens zur Verwendung von frischem, nicht aktiviertem DMC-Katalysator im Schritt (γ) ermöglicht signifikante Einsparungen bei der kommerziellen Herstellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

<u>Schritt (δ)</u>

Gemäß Schritt (δ) wird das in Schritt (γ) erhaltene Reaktionsgemisch, welches im allgemeinen einen Gehalt von 0,05 Gew.-% bis 10 Gew.-% Alkylenoxid enthält, im Reaktor einer Nachreaktion unterzogen oder kontinuierlich in einen Nachreaktor zur Nachreaktion überführt, wobei im Wege der Nachreaktion der Gehalt an freiem Alkylenoxid reduziert wird. In Schritt (δ) wird im Wege der Nachreaktion der Gehalt an freiem Alkylenoxid bevorzugt auf weniger als 0,5 g/l, besonders bevorzugt auf weniger als 0,1 g/l im Reaktionsgemisch reduziert.

Wenn das in Schritt (γ) erhaltene Reaktionsgemisch im Reaktor verbleibt, wird vorzugsweise das Reaktionsgemisch zur Nachreaktion 10 min bis 24 h bei einer Temperatur von 60 bis 140 °C, besonders bevorzugt 1 h bis 12 h bei einer Temperatur von 80 bis 130 °C gehalten. Vorzugsweise wird das Reaktionsgemisch dabei gerührt bis der Gehalt an freiem Alkylenoxid auf weniger als 0,5 g/l, besonders bevorzugt auf weniger als 0,1 g/l im Reaktionsgemisch gesunken ist. Durch die Abreaktion von freiem Alkylenoxid und ggf. Kohlendioxid sinkt der Druck im Reaktor während der Nachreaktion im Schritt (δ) im Allgemeinen ab, bis ein konstanter Wert erreicht ist.

Als Nachreaktor kann beispielsweise ein Rohrreaktor, ein Schlaufenreaktor oder ein Rührkessel dienen. Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Als Nachreaktor wird bevorzugt ein Rohrreaktor eingesetzt, wobei beispielsweise ein einzelner Rohrreaktor oder auch eine Kaskade von mehreren, parallel angeordneten oder linear hintereinander geschalteten Rohrreaktoren verwendet werden kann. Bevorzugt liegt die Verweilzeit im Rohrreaktor dabei zwischen 5 min und 10 h, besonders

bevorzugt zwischen 10 min und 5 h.

Während der Nachreaktion (Schritt (δ)) wird Komponente K zugegeben, wobei Komponente K ausgewählt ist aus mindestens einer Verbindung, die eine Phosphor-Sauerstoff-Wasserstoff-Gruppe enthält.

Die Komponente K wird während der Nachreaktion bevorzugt bei einem Gehalt an freiem Alkylenoxid von 0,1 g/l bis 10 g/l, besonders bevorzugt von 1 g/l bis 10 g/l Alkylenoxid und höchst bevorzugt von 5 g/l bis 10 g/l zugegeben.

Bei der Durchführung des erfindungsgemäßen Verfahrens mit Verwendung eines Rohrreaktors zur Nachreaktion in Schritt (δ) wird die Komponente K bevorzugt in der zweiten Hälfte der Wegstrecke zudosiert, die das Reaktionsgemisch im Rohrreaktor durchläuft.

Komponente K

Als Komponente K geeignete Verbindungen sind dadurch gekennzeichnet, dass sie mindestens eine Phosphor-Sauerstoff-Wasserstoff-Gruppe enthalten. Vorzugsweise ist Komponente K ausgewählt aus mindestens einer Verbindung aus der Gruppe bestehend aus

Phosphorsäure,
Mono- und Dialkylester der Phosphorsäure,
Mono- und Diarylester der Phosphorsäure,
Mono- und Dialkarylester der Phosphorsäure,
$(NH_4)_2HPO_4$,
Phosphonsäure,
Monoalkylester der Phosphonsäure,
Monoarylester der Phosphonsäure,
Monoalkarylester der Phosphonsäure,
Phosphorige Säure,
Mono- und Dialkylester der Phosphorigen Säure,
Mono- und Diarylester der Phosphorigen Säure,
Mono- und Dialkarylester der Phosphorigen Säure, und
Phosphinsäure.

Die Mono- oder Dialkylester von Phosphorsäure sind vorzugsweise die Mono- oder Dialkylester von ortho-Phosphorsäure, Mono-, Di- oder Trialkylester von Pyrophosphorsäure und Mono-, Di-, Tri-, Tetra- oder Polyalkylester von Polyphosphorsäure, besonders bevorzugt die jeweiligen Ester mit Alkoholen mit 1 bis 30 C-Atomen. Die Mono- oder Diarylester von Phosphorsäure sind vorzugsweise die Mono- oder Diarylester von ortho-Phosphorsäure, Mono-, Di- oder Triarylester von Pyrophosphorsäure und Mono-, Di-, Tri-, Tetra- oder Polyarylester von Polyphosphorsäure, besonders bevorzugt die jeweiligen Ester mit Alkoholen mit 6 oder 10 C-Atomen. Die Mono- oder Dialkarylester von Phosphorsäure sind vorzugsweise die Mono- oder Dialkarylester von ortho-Phosphorsäure, Mono-, Di- oder Trialkarylester von Pyrophosphorsäure und Mono-, Di-, Tri-, Tetra- oder Polyalkarylester von Polyphosphorsäure, besonders bevorzugt die jeweiligen Ester mit Alkoholen mit 7 bis 30 C-Atomen. Als Komponente K sind beispielsweise die folgenden Verbindungen geeignet: Phosphorsäurediethylester, Phosphorsäuremonoethylester, Phosphorsäuredipropylester, Phosphorsäuremonopropylester, Phosphorsäuredibutylester, Phosphorsäuremonobutylester, Phosphorsäurediphenylester, Phosphorsäuredikresylester, Fructose-1,6-bisphosphat, Glucose-1-phosphat, Phosphorsäure-bis-(4-nitrophenyl)-ester, Phosphorsäuredibenzylester, Phosphorsäure-diethyl-3-butenylester, Phosphorsäure-dihexadecylester, Phosphorsäure-diphenylester und Phosphorsäure-2-hydroxyethylmethacrylatester.

Als Monoalkylester der Phosphonsäure werden bevorzugt die jeweiligen Ester mit Alkoholen mit 1 bis 30 C-Atomen eingesetzt. Als Monoarylester der Phosphonsäure werden bevorzugt die jeweiligen Ester mit Alkoholen mit 6 oder 10 C-Atomen eingesetzt. Als Monoalkarylester der Phosphonsäure werden bevorzugt die jeweiligen Ester mit Alkoholen mit 7 bis 30 C-Atomen eingesetzt.

Als Mono- und Dialkylester der Phosphorigen Säure werden bevorzugt die Ester mit Alkoholen mit 1 bis 30 C-Atomen eingesetzt. Das beinhaltet beispielsweise Phenylphosphonsäure, Butylphosphonsäure, Dodecylphosphonsäure, Ethylhexylphosphonsäure, Octylphosphonsäure, Ethylphosphonsäure, Methylphosphonsäure und Octadecylphosphonsäure. Als Mono- und Diarylester der Phosphorigen Säure werden bevorzugt die jeweiligen Ester mit Alkoholen mit 6 oder 10 C-Atomen eingesetzt. Als Mono- und Dialkarylester der Phosphorigen Säure werden bevorzugt die jeweiligen Ester mit Alkoholen mit 7 bis 30 C-Atomen eingesetzt.

Besonders bevorzugt ist Komponente K ausgewählt aus mindestens einer Verbindung aus der Gruppe bestehend aus Phosphorsäure, Phosphonsäure, und Phosphinsäure. Höchst bevorzugt ist Komponente K Phosphorsäure.

Die in der Beschreibung der Komponente K genannten Alkohole mit 1 bis 30 C-Atomen sind beispielsweise Methanol, Ethanol, Propanol, Butanol, Pentanol, Hexanol, Heptanol, Octanol, Nonanol, Dekanol, Dodekanol, Tridekanol,

Tetradekanol, Pentadekanol, Hexadekanol, Heptadekanol, Octadekanol, Nonadekanol, Methoxymethanol, Ethoxymethanol, Propoxymethanol, Butoxymethanol, 2-Ethoxyethanol, 2-Propoxyethanol, 2-Butoxyethanol, Phenol, Hydroxyessigsäureethylester, Hydroxyessigsäurepropylester, Hydroxypropionsäureethylester, Hydroxypropionsäurepropylester, 1,2-Ethandiol, 1,2-Propandiol, 1,2,3-Trihydroxypropan, 1,1,1-Trimethylolpropan oder Pentaerythrit.

Des Weiteren sind als Komponente K geeignet Verbindungen des Phosphors, die durch Reaktion mit OH-funktionellen Verbindungen (wie bspw. Wasser) eine oder mehrere Phosphor-Sauerstoff-Wasserstoff-Gruppen ausbilden können. Beispielsweise kommen als solche Verbindungen des Phosphors in Frage Phosphor-(V)-sulfid, Phosphortribromid, Phosphortrichlorid und Phosphortriiodid.

Es können auch beliebige Mischungen der vorgenannten Verbindungen als Komponente K eingesetzt werden. Auch kann Komponente K in Mischung mit Suspensionsmittel oder in Mischung mit Phosphorsäuretrialkylester (insbesondere Phosphorsäuretriethylester) eingesetzt werden.

Die Komponente K wird während der Nachreaktion bevorzugt in einer Menge von 5 ppm bis 1000 ppm, besonders bevorzugt von 10 ppm bis 500 ppm, ganz besonders bevorzugt von 20 bis 200 ppm, jeweils bezogen auf das in Schritt ($\gamma$) erhaltene Reaktionsgemisch, eingesetzt.

Alkylenoxide

Allgemein können für das erfindungsgemäße Verfahren **Alkylenoxide** (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan. Vorzugsweise werden als Alkylenoxide Ethylenoxid und/oder Propylenoxid, insbesondere Propylenoxid eingesetzt.

H-funktionelle Startersubstanz

Als geeignete **H-funktionelle Startersubstanz** ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, -$NH_2$ (primäre Amine), -NH- (sekundäre Amine), -SH und -$CO_2H$, bevorzugt sind -OH und -$NH_2$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionellen Startersubstanzen können auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mn im Bereich von 150 bis 8000 g/mol bei einer Funktionalität von 2 bis 3 und Polyetherpolyole mit einem Molekulargewicht Mn im Bereich von 150 bis 8000 g/mol und einer Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Startersubstanz verstanden.

DMC-Katalysatoren

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,

(ii) wobei im zweiten Schritt der Feststoff aus der aus (i) erhaltenen Suspension durch bekannte Techniken (wie Zentrifugation oder Filtration) abgetrennt wird,

(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

$$M(X)_n \qquad (II)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat ist und

n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (III),

$$M_r(X)_3 \qquad (III)$$

wobei

M ausgewählt ist aus den Metallkationen $Fe^{3+}$, $Al^{3+}$, $Co^{3+}$ und $Cr^{3+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

r ist 2, wenn X = Sulfat, Carbonat oder Oxalat ist und

r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M(X)_s \qquad (IV)$$

wobei

M ausgewählt ist aus den Metallkationen $Mo^{4+}$, $V^{4+}$ und $W^{4+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s ist 2, wenn X = Sulfat, Carbonat oder Oxalat ist und

s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_t \qquad (V)$$

wobei

M ausgewählt ist aus den Metallkationen $Mo^{6+}$ und $W^{6+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat ist und

t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

$$(Y)_a\, M'(CN)_b\, (A)_c \qquad (VI)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),

A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und

a, b und c sind ganzzahlige Zahlen, wobei die Werte für a, b und c so gewählt sind, dass die Elektroneutralität des

Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den DMC-Katalysatoren enthalten sind, sind Verbindungen der allgemeinen Formel (VII)

$$M_x[M'_{x'}(CN)_y]_z \qquad (VII)$$

worin M wie in Formel (II) bis (V) und

M' wie in Formel (VI) definiert ist, und

x, x', y und z sind ganzzahlig und so gewählt, dass die Elektronenneutralität der Doppelmetallcyanidverbindung gegeben ist.

Vorzugsweise ist

x = 3, x' = 1, y = 6 und z = 2,

M = Zn(II), Fe(II), Co(II) oder Ni(II) und

M' = Co(III), Fe(III), Cr(III) oder Ir(III).

Beispiele geeigneter Doppelmetallcyanidverbindungen sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat),

Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus organischem Komplexliganden und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284), sogenannte Cobalt-Salen-Katalysatoren (beschrieben z.B. in US 7,304,172 B2, US 2012/0165549 A1) und bimetallische Zink-Komplexe mit makrozyklischen Liganden (beschrieben z.B. in M. R. Kember et al., Angew. Chem., Int. Ed., 2009, 48, 931).

Die erfindungsgemäß erhaltenen Polyethercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Startersubstanz basieren, welche eine Funktionalität von mindestens 2 besitzt. Des Weiteren können die nach dem erfindungsgemäßen Verfahren erhältlichen Polyethercarbonatpolyole in Anwendungen wie Wasch-und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

**Beispiele**

Einsatzstoffe:

H-funktionelle Startersubstanzen

$\alpha,\omega$-Dihydroxypolypropylenoxid; OH-Zahl = 260 mg KOH/g; Arcol Polyol 1004 der Fa. Bayer MaterialScience AG

Alkylenoxid

Propylenoxid (PO)

DMC-Katalysator

Als DMC-Katalysator wurde bei allen Beispielen DMC-Katalysator hergestellt gemäß Beispiel 6 in WO 01/80994 A1 eingesetzt.

Methoden:

Die Polymerisationsreaktionen wurden in einem 300 ml Druckreaktor der Fa. Parr durchgeführt. Der in den Beispielen eingesetzte Reaktor war ein Druckreaktor und dieser hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Bei dem in den Beispielen eingesetzten Gaseintragsrührer handelte es sich um einen Hohlwellenrührer, bei dem das Gas über eine hohle Welle des Rührers in die im Druckreaktor befindliche Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde. Die in den Beispielen im Zusammenhang mit dem Gaseintragsrührer verwendete Bezeichnung "rpm" bezieht sich auf die Anzahl der Umdrehungen des Rührers pro Minute.

Die Reaktion wurde mit Hilfe von *insitu* IR Spektroskopie verfolgt. Hierzu wurde eine Matrix-FM der Firma Bruker des Typs TNo. 120200MX mit einer 3 mm Diamantkopfsonde verwendet. Über Kalibrierungsdaten der Diamantkopfsonde wurden aus den gemessenen Spektren mit Hilfe der Software PEAXACT der Firma S-PACT die entsprechenden Konzentrationsprofile der Reaktionskomponenten berechnet.

Der Anteil an eingebautem $CO_2$ im resultierenden Polyethercarbonatpolyol ("eingebautes $CO_2$") sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst.

Die relevanten Resonanzen im $^1$H-NMR Spektrum (bezogen auf TMS = 0 ppm), die zur Integration verwendet wurden, sind wie folgt:

I1: 1,10 - 1,17 ppm: Methylgruppe der Polyether-Einheiten, Fläche der Resonanz entspricht drei H Atomen,
I2: 1,25 - 1,34 ppm: Methylgruppe der Polycarbonat-Einheiten, Fläche der Resonanz entspricht drei H Atomen,
I3: 1,45 - 1,48 ppm: Methylgruppe des cyclischen Carbonats, Fläche der Resonanz entspricht drei H Atomen,
I4: 2,95 - 3,00 ppm: CH Gruppe für freies, nicht abreagiertes Propylenoxid, Fläche der Resonanz entspricht einem H Atom.

Angegeben sind das molare Verhältnis der Menge an cyclischem Propylencarbonat zu linearen Carbonat-Einheiten im Polyethercarbonatpolyol (Selektivität g/e) und das molare Verhältnis von Carbonatgruppen zu Ethergruppen im Polyethercarbonatpolyol (e/f).

Unter Berücksichtigung der relativen Intensitäten wurden die Werte wie folgt berechnet:

Molares Verhältnis der Menge an cyclischem Propylencarbonat zu linearen Carbonat-Einheiten im Polyethercarbonatpolyol (Selektivität g/e):

$$g/e = I3 / I2 \quad (VIII)$$

Molares Verhältnis von Carbonatgruppen zu Ethergruppen im Polyethercarbonatpolyol (e/f):

$$e/f = I2 / I1 \quad (IX)$$

Unter Berücksichtigung der relativen Intensitäten wurde gemäß der folgenden Formel (X) für das polymer gebundene Carbonat ("lineares Carbonat" LC) in der Reaktionsmischung in mol% umgerechnet:

$$LC = \frac{0{,}33 * I2}{0{,}33 * I2 + I4 + 0{,}33 * I1} * 100 \quad (X)$$

Der Gewichtsanteil (in Gew.-%) polymer-gebundenen Carbonats (LC') in der Reaktionsmischung wurde nach Formel (XI) berechnet,

$$LC' = \frac{0{,}33 * I2 * 102}{N} * 100\% \quad (XI)$$

wobei sich der Wert für N ("Nenner" N) nach Formel (XII) berechnet:

$$N = I2 * 102 + I3 * 102 + I4 * 58 + 0{,}33 * I1 * 58 \quad (XII)$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid.
Der Gewichtsanteil (in Gew.-%) an cyclischem Carbonat (CC') in der Reaktionsmischung wurde nach Formel (XIII) berechnet,

$$CC' = \frac{I3 * 102}{N} * 100\% \quad (XIII)$$

wobei sich der Wert für N nach Formel (XII) berechnet.
Um aus den Werten der Zusammensetzung der Reaktionsmischung die Zusammensetzung bezogen auf den Polymer-Anteil (bestehend aus Polyether, welcher aus Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf das Polyethercarbonatpolyol-Molekül, das bei der Copolymerisation und den Aktivierungsschritten entstanden ist.
Die Menge an gebildeten cyclischen Propylencarbonat wird über die Bilanzierung der in der Reaktionsmischung vorhandenen Gesamtmenge an cyclischem Propylencarbonat und der ggf. als Vorlage eingesetzten Menge an Propylencarbonat bestimmt.

**Beispiel 1: Herstellung von Polyethercarbonatpolyol mit Zugabe von $H_3PO_4$:**

Schritt (α):

In einem 300 ml Druckreaktor ausgestattet mit einem Gaseintragsrührer wurde eine Mischung aus DMC-Katalysator (18 mg) und Startersubstanz (α,ω-Dihydroxypolypropylenoxid; OH-Zahl = 260 mg KOH/g; 21,75 g) vorgelegt

und die Suspension 30 min bei 130°C in einem partiellen Vakuum (50 mbar absolut) unter Durchleiten von Argon gerührt (800 rpm).

Schritt (β):

Die Suspension wurde dann mit 15 bar $CO_2$ beaufschlagt, wobei ein leichter Temperaturabfall zu beobachten war. Nach Wiedererreichen einer Temperatur von 130°C wurden Propylenoxid (PO, 2,2 g) mit Hilfe einer HPLC-Pumpe (3 ml/min) zudosiert. Der Beginn der Polymerisation von PO machte sich durch einen Temperaturanstieg und durch einen Druckabfall (bezogen auf Ausgangsdruck nach Zugabe von PO) bemerkbar. Nach dem ersten Druckabfall wurden zwei weitere Zugaben von PO (2,2 g; 3 mL/min) durchgeführt.

Schritt (γ):

Das Reaktionsgemisch wurde auf 100 °C abgekühlt und während des Schritts (γ) der Druck im Druckreaktor durch Nachdosieren von $CO_2$ mit Hilfe eines Massenflußreglers bei 15 bar gehalten. Es wurde unter Rühren (800 U/min) Propylenoxid (68 g) über eine HPLC-Pumpe (1 mL/min) zudosiert. Der Reaktionsverlauf wurde mit Hilfe von *in-situ* IR-Spektroskopie verfolgt. Die PO-Konzentration lag zu diesem Zeitpunkt bei 84,5 g/L.

Schritt (δ):

Nach beendeter PO-Zugabe wurde bei 100 °C und Reaktionsdruck (15 bar) weitere 45 min gerührt (800 U/min). Die PO-Konzentration war zu diesem Zeitpunkt auf 8,8 g/L abgefallen. Anschließend wurde Komponente K (0,01 g $H_3PO_4$) gelöst in Phosphorsäuretriethylester ($(EtO)_3PO$, 5,35 g) zum Reaktionsgemisch dosiert und die Reaktionsmischung für weitere 12 h bei 100°C gerührt. Die Reaktion wurde während dieser Zeit weiterhin mit Hilfe von *in-situ* IR-Spektroskopie verfolgt. Nach 12 h Stunden wurde die Reaktion durch Abkühlen des Druckreaktors im Eisbad beendet, der Überdruck abgelassen und das resultierende Produkt analysiert. Der im Polyethercarbonatpolyol eingebaute $CO_2$-Anteil und das Verhältnis an cyclischem zu linearem Carbonat wurden mittels $^1H$-NMR Spektroskopie bestimmt.

PO-Konzentration 45 min nach beendeter PO-Zugabe bei Zugabe von Komponente K: 8,8 g/L

| | |
|---|---|
| Anteil an eingebautem $CO_2$: | 10,2 Gew.-% |
| e/f: | 0,18 |
| g/e: | 0,11 |

**Beispiel 2 (Vergleich): Herstellung von Polyethercarbonatpolyol ohne Zugabe von $H_3PO_4$:**

Schritt (α):

In einem 300 ml Druckreaktor ausgestattet mit einem Gaseintragsrührer wurde eine Mischung aus DMC-Katalysator (18 mg) und Startersubstanz (α,ω-Dihydroxypolypropylenoxid; OH-Zahl = 260 mg KOH/g; 21,75 g) vorgelegt und die Suspension 30 min bei 130°C in einem partiellen Vakuum (50 mbar absolut) unter Durchleiten von Argon gerührt (800 rpm).

Schritt (β):

Die Suspension wurde dann mit 15 bar $CO_2$ beaufschlagt, wobei ein leichter Temperaturabfall zu beobachten war. Nach Wiedererreichen einer Temperatur von 130°C wurden Propylenoxid (PO, 2,2 g) mit Hilfe einer HPLC-Pumpe (3 ml/min) zudosiert. Der Beginn der Polymerisation von PO machte sich durch einen Temperaturanstieg und durch einen Druckabfall (bezogen auf Ausgangsdruck nach Zugabe von PO) bemerkbar. Nach dem ersten Druckabfall wurden zwei weitere Zugaben von PO (2,2 g; 3 mL/min) durchgeführt.

Schritt (γ):

Das Reaktionsgemisch wurde auf 100 °C abgekühlt und während der nachfolgenden Schritte der Druck im Druckreaktor durch Nachdosieren von $CO_2$ mit Hilfe eines Massenflußreglers bei 15 bar gehalten. Es wurde unter Rühren (800 U/min) Propylenoxid (68 g) über eine HPLC-Pumpe (1 mL/min) zudosiert. Der Reaktionsverlauf wurde mit Hilfe von *in-situ* IR-Spektroskopie verfolgt.

Schritt (δ):

Nach beendeter PO-Zugabe wurde bei 100 °C und Reaktionsdruck (15 bar) weitere 45 min gerührt (800 U/min). Die PO-Konzentration war zu diesem Zeitpunkt auf 8,8 g/L abgefallen. Anschließend wurde die Reaktionsmischung für weitere 12 h bei 100°C gerührt. Die Reaktion wurde während dieser Zeit weiterhin mit Hilfe von *in-situ* IR-Spektroskopie verfolgt. Nach 12 h Stunden wurde die Reaktion durch Abkühlen des Druckreaktors im Eisbad beendet, der Überdruck abgelassen und das resultierende Produkt analysiert. Der im Polyethercarbonatpolyol eingebaute $CO_2$-Anteil und das Verhältnis an cyclischem zu linearem Carbonat wurden mittels $^1$H-NMR Spektroskopie bestimmt.

| | |
|---|---|
| PO-Konzentration 45 min nach beendeter PO-Zugabe: | 8,8 g/L |
| Anteil an eingebautem $CO_2$ : | 10,1 Gew.-% |
| e/f: | 0,17 |
| g/e: | 0,16 |

**Beispiel 3 (Vergleich): Herstellung von Polyethercarbonatpolyol mit Zugabe von Phosphorsäuretriethylester ($(EtO)_3PO$):**

Schritt (α):

In einem 300 ml Druckreaktor ausgestattet mit einem Gaseintragsrührer wurde eine Mischung aus DMC-Katalysator (18 mg) und Startersubstanz (α,ω-Dihydroxypolypropylenoxid; OH-Zahl = 260 mg KOH/g; 21,75 g) vorgelegt und die Suspension 30 min bei 130°C in einem partiellen Vakuum (50 mbar absolut) unter Durchleiten von Argon gerührt (800 rpm).

Schritt (β):

Die Suspension wurde dann mit 15 bar $CO_2$ beaufschlagt, wobei ein leichter Temperaturabfall zu beobachten war. Nach Wiedererreichen einer Temperatur von 130°C wurden Propylenoxid (PO, 2,2 g) mit Hilfe einer HPLC-Pumpe (3 ml/min) zudosiert. Der Beginn der Polymerisation von PO machte sich durch einen Temperaturanstieg und durch einen Druckabfall (bezogen auf Ausgangsdruck nach Zugabe von PO) bemerkbar. Nach dem ersten Druckabfall wurden zwei weitere Zugaben von PO (2,2 g; 3 mL/min) durchgeführt.

Schritt (γ):

Das Reaktionsgemisch wurde auf 100 °C abgekühlt und während der nachfolgenden Schritte der Druck im Druckreaktor durch Nachdosieren von $CO_2$ mit Hilfe eines Massenflußreglers bei 15 bar gehalten. Es wurde unter Rühren (800 U/min) Propylenoxid (68 g) über eine HPLC-Pumpe (1 mL/min) zudosiert. Der Reaktionsverlauf wurde mit Hilfe von *in-situ* IR-Spektroskopie verfolgt.

Schritt (δ):

Nach beendeter PO-Zugabe wurde bei 100 °C und Reaktionsdruck (15 bar) weitere 45 min gerührt (800 U/min). Die PO-Konzentration war zu diesem Zeitpunkt auf 8,8 g/L abgefallen. Anschließend wurde $(EtO)_3PO$ (5,35 g) zum Reaktionsgemisch dosiert und die Reaktionsmischung für weitere 12 h bei 100°C gerührt. Die Reaktion wurde während dieser Zeit weiterhin mit Hilfe von *in-situ* IR-Spektroskopie verfolgt. Nach 12 h Stunden wurde die Reaktion durch Abkühlen des Druckreaktors im Eisbad beendet, der Überdruck abgelassen und das resultierende Produkt analysiert. Der im Polyethercarbonatpolyol eingebaute $CO_2$-Anteil und das Verhältnis an cyclischem zu linearem Carbonat wurden mittels $^1$H-NMR Spektroskopie bestimmt.

| | |
|---|---|
| PO-Konzentration 45 min nach beendeter PO-Zugabe: | 8,8 g/L |
| Anteil an eingebautem $CO_2$: | 10,0 Gew.-% |
| e/f: | 0,17 |
| g/e: | 0,15 |

**Beispiel 4 (Vergleich): Herstellung von Polyethercarbonatpolyol mit Zugabe von $H_3PO_4$ und $(EtO)_3PO$ in Schritt (α):**

Schritt (α):

In einem 300 ml Druckreaktor ausgestattet mit einem Gaseintragsrührer wurde eine Mischung aus DMC-Katalysator (18 mg), Startersubstanz (α,ω-Dihydroxypolypropylenoxid; 435 g/mol; 21,75 g) und Komponente K (0,01 g $H_3PO_4$) gelöst in Phosphorsäuretriethylester ($(EtO)_3PO$, 5,35 g) vorgelegt und die Suspension 30 min bei 130°C in einem partiellen Vakuum (50 mbar absolut) unter Durchleiten von Argon gerührt (800 rpm).

Schritt (β):

Die Suspension wurde dann mit 15 bar $CO_2$ beaufschlagt, wobei ein leichter Temperaturabfall zu beobachten war. Nach Wiedererreichen einer Temperatur von 130°C wurden Propylenoxid (PO, 2,2 g) mit Hilfe einer HPLC-Pumpe (3 ml/min) zudosiert.

Es wurde weder ein Temperaturanstieg noch ein Druckabfall (bezogen auf Ausgangsdruck nach Zugabe von PO) beobachtet.

*In-situ* IR-Spektroskopie zeigte einen Anstieg der Konzentration von Propylenoxid während Schritt (β). Auch nach 2 h wurde die erhöhte Konzentration von Propylenoxid beobachtet. Es fand keine Umsetzung von Propylenoxid (keine Reaktion) statt.

**Tabelle 1:** Zusammenfassung der Ergebnisse

| Beispiel | Zugabezeitpunkt der Komponente K | Menge der Komponente K ($H_3PO_4$) [ppm] a) | Verhältnis cyclisches / lineares Carbonat [g/e] | Anteil an eingebautem $CO_2$ [Gew.-%] |
|---|---|---|---|---|
| 1 | In Schritt (δ): 45 min nach Beenden der PO Zugabe bei [PO] = 8,8 g/L | 100 | 0,11 | 10,2 |
| 2 (Vgl.) | - | 0 | 0,16 | 10,1 |
| 3 (Vgl.) | - | 0 | 0,15 | 10,0 |
| 4 (Vgl.) | In Schritt (α) | 100 | Keine Reaktion | |

a) Angegebene Menge an Komponente K bezieht sich auf den Gehalt (ppm) im Reaktionsgemisch.
[PO] Konzentration von Propylenoxid
Vgl. = Vergleichsbeispiel

Ein Vergleich der Ergebnisse aus Beispiel 1 und Vergleichsbeispiel 2 belegt, dass im Falle einer erfindungsgemäßen Zugabe von $H_3PO_4$ ein geringeres Verhältnis von cyclischem Propylencarbonat zu linearem Carbonat erhalten wird bei vergleichbarem $CO_2$-Gehalt des erhaltenen Polyethercarbonatpolyols (Beispiel 1) als ohne Zugabe von Komponente K (Vergleichsbeispiel 2). Das Vergleichsbeispiel 3 zeigt, dass die Zugabe von $(EtO)_3PO$ keinen Einfluss auf die Bildung von cyclischem Propylencarbonat hat. Vergleichsbeispiel 4 belegt, dass bei einer Zugabe von Komponente K im Schritt der Trocknung (Schritt (α)) der DMC-Katalysator keine Aktivität in der Copolymerisation zeigt.

**Patentansprüche**

**1.** Verfahren zur Herstellung von Polyethercarbonatpolyolen durch Anlagerung von Alkylenoxiden und Kohlendioxid an H-funktionelle Startersubstanz in Gegenwart eines Doppelmetallcyanid (DMC)-Katalysators oder in Gegenwart eines Metallkomplexkatalysators auf Basis der Metalle Zink und/oder Cobalt, wobei

(γ) Alkylenoxid und Kohlendioxid an H-funktionelle Startersubstanz in einem Reaktor in Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird, und wobei
(δ) das in Schritt (γ) erhaltene Reaktionsgemisch im Reaktor verbleibt oder kontinuierlich in einen Nachreaktor

überführt wird, wobei jeweils im Wege einer Nachreaktion der Gehalt an freiem Alkylenoxid im Reaktionsgemisch reduziert wird,

**dadurch gekennzeichnet, dass** während der Nachreaktion eine Komponente K zugegeben wird, wobei Komponente K ausgewählt ist aus mindestens einer Verbindung, die eine Phosphor-Sauerstoff-Wasserstoff-Gruppe enthält.

**2.** Verfahren gemäß Anspruch 1, wobei die Komponente K während der Nachreaktion bei einem Gehalt an freiem Alkylenoxid von 0,1 g/l bis 10 g/l, bevorzugt von 1 g/l bis 10 g/l, besonders bevorzugt von 5 g/l bis 10 g/l Alkylenoxid zugegeben wird.

**3.** Verfahren gemäß Anspruch 1 oder 2, wobei Komponente K während der Nachreaktion in einer Menge von 5 ppm bis 1000 ppm, bezogen auf das in Schritt (γ) erhaltene Reaktionsgemisch, eingesetzt wird.

**4.** Verfahren gemäß einem der Ansprüche 1 bis 3, wobei vor Schritt (γ)

(β) zur Aktivierung eine Teilmenge (bezogen auf die Gesamtmenge der bei der Aktivierung und Copolymerisation eingesetzten Menge an Alkylenoxiden) von Alkylenoxid zu einer Mischung aus H-funktioneller Startersubstanz und DMC-Katalysator oder zu einer Mischung aus Suspensionsmittel und DMC-Katalysator zugesetzt wird, wobei diese Zugabe der Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann.

**5.** Verfahren gemäß einem der Ansprüche 1 bis 4, wobei in einem ersten Schritt

(α) die H-funktionelle Startersubstanz oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Suspensionsmittel vor oder nach der Trocknung zugesetzt wird.

**6.** Verfahren gemäß einem der Ansprüche 1 bis 5, wobei in Schritt (γ) Alkylenoxid, H-funktionelle Startersubstanz und DMC-Katalysator während der Reaktion kontinuierlich in den Reaktor zudosiert werden in Gegenwart von Kohlendioxid und das resultierende Reaktionsgemisch kontinuierlich aus dem Reaktor entfernt wird.

**7.** Verfahren gemäß einem der Ansprüche 1 bis 6, wobei Komponente K ausgewählt ist aus mindestens einer Verbindung aus der Gruppe bestehend aus

Phosphorsäure,
Mono- und Dialkylester der Phosphorsäure,
Mono- und Diarylester der Phosphorsäure,
Mono- und Dialkarylester der Phosphorsäure,
$(NH_4)_2HPO_4$,
Phosphonsäure,
Monoalkylester der Phosphonsäure,
Monoarylester der Phosphonsäure,
Monoalkarylester der Phosphonsäure,
Phosphorige Säure,
Mono- und Dialkylester der Phosphorigen Säure,
Mono- und Diarylester der Phosphorigen Säure,
Mono- und Dialkarylester der Phosphorigen Säure,
Phosphinsäure.

**8.** Verfahren gemäß einem der Ansprüche 1 bis 6, wobei Komponente K ausgewählt ist aus mindestens einer Verbindung aus der Gruppe bestehend aus Phosphorsäure, Phosphonsäure, und Phosphinsäure.

**9.** Verfahren gemäß einem der Ansprüche 1 bis 6, wobei Komponente K Phosphorsäure ist.

**10.** Verfahren gemäß einem der Ansprüche 1 bis 9, wobei die H-funktionelle Startersubstanz ausgewählt ist aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mn im Bereich von 150 bis 8000 g/mol bei einer Funktionalität von 2 bis 3 und Polyetherpolyole mit einem Molekulargewicht Mn im Bereich von 150 bis 8000 g/mol bei einer Funktionalität von 2 bis 3.

**11.** Verfahren gemäß einem der Ansprüche 1 bis 10, wobei in Schritt (δ) das in Schritt (γ) erhaltene Reaktionsgemisch kontinuierlich in einen Nachreaktor überführt wird, wobei der Nachreaktor ein Rohrreaktor ist.

**12.** Verfahren gemäß Anspruch 11, wobei in Schritt (δ) die Komponente K in der zweiten Hälfte der Wegstrecke zudosiert wird, die das Reaktionsgemisch im Rohrreaktor durchläuft.

**13.** Verfahren gemäß einem der Ansprüche 1 bis 12, wobei in Schritt (δ) im Wege einer Nachreaktion der Gehalt an freiem Alkylenoxid auf weniger als 0,5 g/l im Reaktionsgemisch reduziert wird.

**14.** Verfahren gemäß einem der Ansprüche 1 bis 13, wobei Komponente K während der Nachreaktion in einer Menge von 10 ppm bis 500 ppm, bezogen auf das in Schritt (γ) erhaltene Reaktionsgemisch, eingesetzt wird.

**15.** Verfahren gemäß einem der Ansprüche 1 bis 14, wobei Komponente K während der Nachreaktion in einer Menge von 20 bis 200 ppm, bezogen auf das in Schritt (γ) erhaltene Reaktionsgemisch, eingesetzt wird.

Europäisches Patentamt
European Patent Office
Office européen des brevets

# EUROPÄISCHER RECHERCHENBERICHT

Nummer der Anmeldung
EP 15 15 2830

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 4 145 525 A (DIXON DALE D ET AL) 20. März 1979 (1979-03-20)<br>* Anspruch 1 *<br>* Beispiel 1 *<br>* Spalte 3, Zeilen 1-13 *<br>----- | 1-15 | INV.<br>C08G64/34<br>C08G64/42 |
| A | WO 2012/163944 A1 (BAYER IP GMBH [DE]; HOFMANN JOERG [DE]; KLESCZEWSKI BERT [DE]; SCHNEID) 6. Dezember 2012 (2012-12-06)<br>* Ansprüche *<br>----- | 1-15 | |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| Den Haag | 1. Juli 2015 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 15 15 2830

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-07-2015

| Im Recherchenbericht angeführtes Patentdokument | Datum der Veröffentlichung | Mitglied(er) der Patentfamilie | Datum der Veröffentlichung |
|---|---|---|---|
| US 4145525 A | 20-03-1979 | KEINE | |
| WO 2012163944 A1 | 06-12-2012 | CA 2837624 A1 | 06-12-2012 |
| | | CN 103703052 A | 02-04-2014 |
| | | EP 2530101 A1 | 05-12-2012 |
| | | EP 2714770 A1 | 09-04-2014 |
| | | JP 2014515429 A | 30-06-2014 |
| | | KR 20140035455 A | 21-03-2014 |
| | | SG 195061 A1 | 30-12-2013 |
| | | US 2014107245 A1 | 17-04-2014 |
| | | WO 2012163944 A1 | 06-12-2012 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0222453 A
- WO 2003029325 A
- WO 2008092767 A
- EP 12181907 A
- EP 12181905 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- US 7304172 B2
- US 20120165549 A1
- WO 0180994 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **M. H. CHISHOLM et al.** *Macromolecules,* 2002, vol. 35, 6494
- **S. D. ALLEN.** *J. Am. Chem. Soc.,* 2002, vol. 124, 14284
- **M. R. KEMBER et al.** *Angew. Chem., Int. Ed.,* 2009, vol. 48, 931